(19) Europäisches Patentamt

European Patent Office

Office européen des brevets

(11) EP 0 735 964 B1

# (12) FASCICULE DE BREVET EUROPEEN

(45) Date de publication et mention
de la délivrance du brevet:
**30.09.1998 Bulletin 1998/40**

(21) Numéro de dépôt: 95903724.3

(22) Date de dépôt: 05.01.1995

(51) Int Cl.⁶: **B62D 37/00**, B60G 25/00,
B60G 21/10, F16F 7/10

(86) Numéro de dépôt international:
**PCT/BE95/00001**

(87) Numéro de publication internationale:
**WO 95/18737 (13.07.1995 Gazette 1995/30)**

(54) **SYSTEME DE SUSPENSION CENTRIPETE POUR VEHICULE AVEC REPORT DE POIDS SUR LES ROUES INTERIEURES**

ZENTRIPETALAUHÄNGUNGSSYSTEM FÜR FAHRZEUGE MIT LASTÜBERTRAGUNG NACH DEN INNEREN RÄDERN

CENTRIPETAL VEHICLE SUSPENSION SYSTEM PROVIDING WEIGHT TRANSFER ONTO THE INNER WHEELS

(84) Etats contractants désignés:
**BE DE ES FR GB IE IT NL SE**

(30) Priorité: **06.01.1994 BE 9400012**

(43) Date de publication de la demande:
**09.10.1996 Bulletin 1996/41**

(73) Titulaires:
• **Mageren, Jean-Pierre**
**7180 Seneffe (BE)**
• **Mageren, Claude**
**6060 Gilly (BE)**

(72) Inventeurs:
• **Mageren, Jean-Pierre**
**7180 Seneffe (BE)**
• **Mageren, Claude**
**6060 Gilly (BE)**

(74) Mandataire: **Colens, Alain**
**c/o Bureau Colens SPRL**
**rue Frans Merjay 21**
**1050 Bruxelles (BE)**

(56) Documents cités:
DE-A- 3 020 982          DE-B- 1 214 100
FR-A- 525 192            FR-A- 1 162 388
FR-A- 2 108 551          US-A- 1 978 498

Printed by Jouve, 75001 PARIS (FR)

## Description

La présente invention concerne un dispositif permettant le report de poids sur la ou les roues intérieures d'un véhicule en virage retardant sensiblement son renversement.

Actuellement on utilise uniquement des systèmes de stabilisation de la caisse sans parvenir à reporter le poids sur la ou les roues intérieures.

Les différents constructeurs utilisent pour la stabilisation du véhicule des solutions telles que des barres stabilisatrices, des suspensions hydropneumatiques et des suspensions actives (Formule 1).

Le système à barres stabilisatrices a pour effet d'éviter les mouvements de caisse et d'essayer d'éviter l'écrasement de la suspension de la roue extérieure sans obtenir un report de poids sur la roue intérieure.

En ce qui concerne la suspension hydropneumatique, elle permet de durcir la suspension de la roue extérieure évitant ainsi l'écrasement de la suspension de la roue extérieure mais sans arriver à un report de poids sur la roue intérieure.

La suspension active de la formule I, qui a pour but d'éviter les mouvements de la caisse, mais ne possédant pas de ressorts; il en résulte que cette suspension est très inconfortable. D'ailleurs elle fut interdite en 1993. De plus elle ne garantit pas une adhérence parfaite au sol.

Selon la demande européenne No 0 538 608 déposée par "PORSCHE, déplacement de masse", il est fait appel à un déplacement de masse située dans la structure de la caisse mais ce système est destiné à amortir les vibrations de celle-ci.

Tous ces dispositifs n'apportent pas de solution efficace au soulèvement de la roue intérieure ainsi qu'à l'amélioration de la sécurité d'un véhicule en virage. La sollicitation de la suspension et des pneus n'est pas réduite.

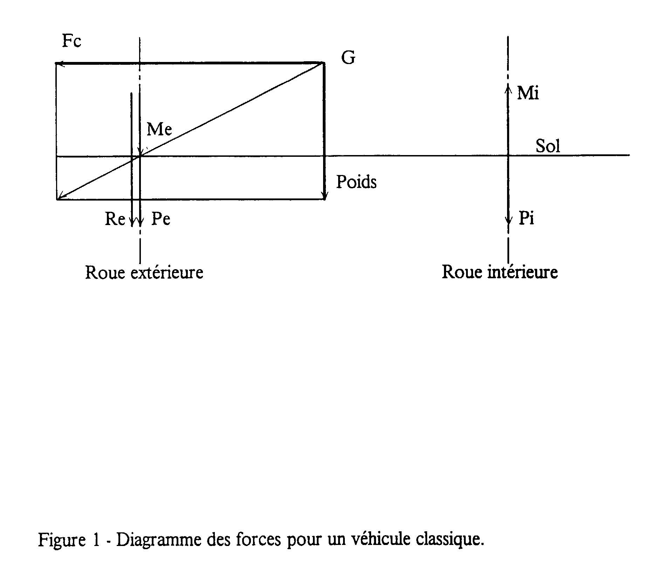

Avec les suspensions classiques connues actuellement, les véhicules ont tendance à s'incliner dans les virages sous l'effet de la force centrifuge et l'effet est fonction de la voie, et de la position du centre de gravité du véhicule par rapport au sol. La force résultante de la force centrifuge et du poids du véhicule, a pour effet de charger la roue extérieure et de réduire la charge sur la roue intérieure. Le retournement se produit lorsque la résultante se trouve à l'extérieur de la roue extérieure (Fig 1).

Le but de la présente invention est de remédier à ces inconvénients et de proposer une solution efficace, facile à réaliser et sans augmentation importante du prix de revient. D'autre part, elle permet d'utiliser tous les systèmes de suspension.

Le résultat recherché est obtenu par un système capable de charger la roue intérieure du véhicule en virage.

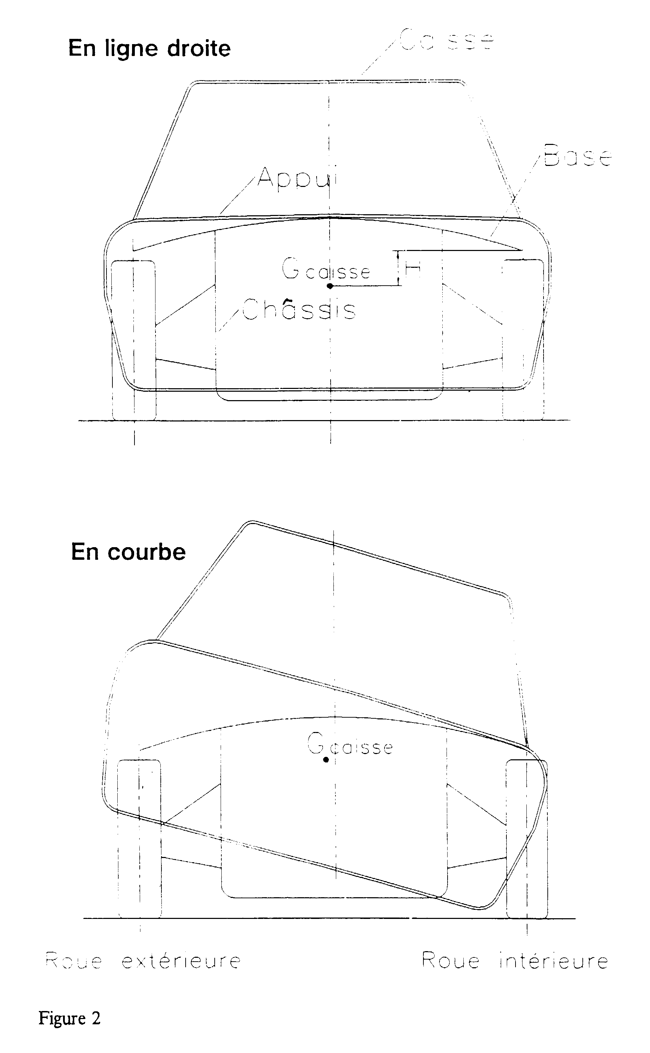

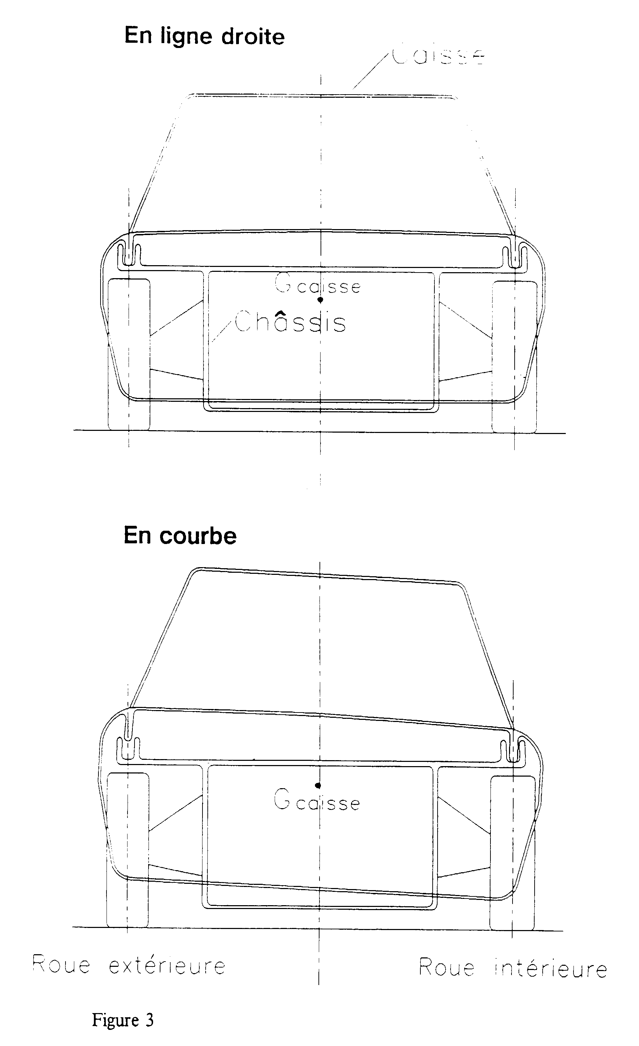

Conformément à la présente invention, le système proposé est caractérisé par la mobilité de la caisse sans que celle-ci ne glisse horizontalement sur le berceau de la suspension. De plus le point d'appui de la caisse sur ce berceau se trouve obligatoirement au-dessus du centre de gravité de la caisse. Le basculement latéral de la caisse permet le report d'une partie de son poids sur la roue intérieure (Fig. 2 et 3).

Le berceau de la suspension mentionné comprend : les roues, la suspension traditionnelle et le berceau sur lequel la caisse sera mobile.

La caisse comprend : la carrosserie, le moteur ainsi que les occupants et la charge. Selon la demande DE-B-1 214 100, le mouvement de rotation de la caisse sur le berceau sous l'effet de la force centrifuge a pour but d'incliner les roues (comme décrit dans la colonne 1 ligne 20-25 et colonne 2 paragraphe 1) pour assurer une meilleure adhérence. L'inclinaison des roues a pour effet une usure anormale des pneus ou nécessite d'utiliser des pneus de moto ce qui réduit très fortement l'adhérence.

Comme montré aux figures 1 et 7, le mouvement de la caisse est un mouvement de balancier ou de balançoire suivant un arc de cercle dont le centre est situé au-dessus du centre de gravité et la caisse est située en-dessous du centre de gravité.

La rotation de la caisse sur le berceau déplace le centre de gravité de la caisse vers la roue extérieure (comme décrit dans la colonne 3).

La demande DE-B-1 214 100 ne permet pas le report du poids sur les roues intérieures et n'est pas l'effet recherché.

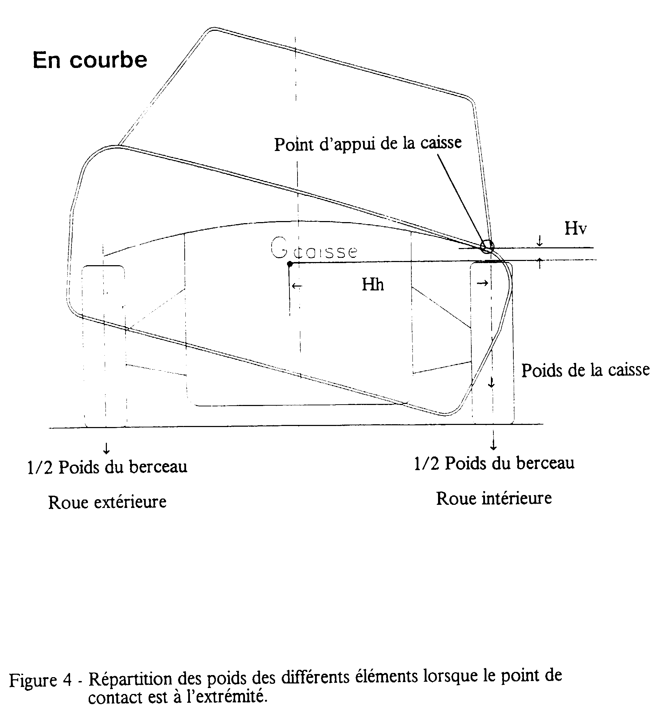

Conformément à la présente invention le point d'appui initial de la caisse se déplacera sous l'effet de la force centrifuge de son point d'appui initial vers la roue intérieure modifiant ainsi la répartition de poids sur les roues. Lorsque la caisse a son appui sur la roue intérieure, on aura la répartition suivante : poids sur la roue extérieure = 1/2 poids du berceau; poids sur la roue intérieure = 1/2 poids du berceau + le poids total de la caisse (Fig 4).

Le mouvement de la caisse est régi par l'équation suivante :

$$\text{Poids de la caisse} \times Hh = \text{Force centrifuge} \times Hv \qquad (1)$$

Hh étant la distance horizontale entre le centre de gravité de la caisse et le point d'appui de la caisse sur le berceau et Hv étant la distance verticale entre le centre de gravité de la caisse et le point de contact de la caisse avec le berceau.

Le mouvement de la caisse est fonction de la force centrifuge, et Hh augmente avec la force centrifuge tandis que Hv diminue avec cette force. Le poids peut être considéré comme une constante.

D'après l'équation (1), l'équilibre est fonction de la force centrifuge.

Lorsque la caisse est en équilibre pour une force centrifuge donnée, le poids de la caisse est reporté au poids de contact. Quand le point de contact est au déport maximum, le poids de la caisse est reporté au maximum sur la roue intérieure.

Le bénéfice qui est obtenu avec le système de suspension centripète conformément à la présente invention est illustré par le tableau No 1.

A titre exemple on peut prendre le cas suivant : poids du véhicule = 500 kg; poids de la caisse = 350 kg; poids du berceau = 150 kg; vitesse = 115 km/h; rayon de courbure = 50 m; voie = 1,60 m; position du centre de gravité à partir du sol = 0,40 m pour le berceau et 0,50 m pour la caisse.

Il résulte du tableau que pour un véhicule classique la résultante sur la roue intérieure est 0 kg et de 500 kg sur la roue extérieure tandis que pour une suspension centripète, on a respectivement 130 kg et 370 kg. Le bénéfice qui en résulte est une augmention de 20% sur la vitesse. Le pourcentage de bénéfice est une constante qui est indépendante du rayon de courbure.

Le bénéfice augmente lorsque le rapport entre le poids de la caisse et le poids du berceau augmente. La roue intérieure sera davantage chargée si la vitesse augmente.

Une réalisation pratique de la présente invention consiste en un châssis reliant les berceaux avant et arrière d'une façon rigide. Les berceaux avant et arrière sont surmontés chacun d'une crémaillère courbe dont la forme est fonction de l'effet recherché (confort, stabilité). La caisse comprend également deux crémaillères dont les formes sont différentes de celles du berceau et les dentures doivent être du même module . La caisse repose sur les crémaillères correspondantes du berceau , la différence de la forme des crémaillères inférieures et supérieures permettant le déplacement du point d'appui de la caisse sur le berceau vers la roue intérieure. Le point d'appui doit toujours se trouver au-dessus du centre de gravité de la caisse même pendant son déplacement. Ce qui revient à dire que la valeur Hv de l'équation (1) doit toujours être positive.

A titre d'exemple on peut citer une autre forme de réalisation pour laquelle les dents des crémaillères sont remplacées par des liaisons élastiques amorties empêchant tout déplacement transversal, qui sont placées entre les courbures de la caisse et du berceau.

Une autre forme de réalisation consiste dans un système où la caisse repose sur les extrémités extérieures du berceau permettant le soulèvement de la caisse du côté de la roue extérieure et le report du poids de la caisse sur la roue intérieure. Ce soulèvement doit être limité par des liaisons élastiques amorties, par un système hydraulique ou hydropneumatique.

EP 0 735 964 B1

Tableau N°1

## TABLEAU DE COMPARAISON DES DIAGRAMMES DES FORCES

| TYPE DE SUSPENSION | | CLASSIQUE | CENTRIPETE | | |
|---|---|---|---|---|---|
| | | | CAISSE | BERCEAU | TOTAL |
| - Poids du véhicule : | Kg | 500 | | | 500 |
| - Poids de la caisse : | Kg | | 350 | | |
| - Poids du berceau : | Kg | | | 150 | |
| - Vitesse : | Km/h | 115 | 115 | 115 | 115 |
| - Rayon de courbure : | mètres | 50 | 50 | 50 | 50 |
| - Voie : | mètres | 1.60 | 1.60 | 1.60 | 1.60 |
| - Position du centre de gravité à partir du sol.: | mètres | 0.40 | 0.50 | 0.40 | |
| La force centrifuge (Fc) = | Kg | 1000 | 700 | 300 | 1000 |
| Le poids sur la roue intérieure (Pi) = | Kg | 250 | 350 | 75 | 425 |
| Le poids sur la roue extérieure (Pe) = | Kg | 250 | 0 | 75 | 75 |
| Force de renversement sur la roue intérieure (Mi) = | Kg | - 250 | - 220 | - 75 | - 295 |
| Force de renversement sur la roue extérieure (Me) = | Kg | + 250 | + 220 | + 75 | + 295 |
| La résultante sur la roue intérieure (Ri) = Pi + Mi = | Kg | **0** | **130** | **0** | **130** |
| La résultante sur la roue extérieure (Re) = Pe + Me = | Kg | 500 | 220 | 150 | 370 |

4

# EP 0 735 964 B1

**Revendications**

1. Système de suspension pour véhicules à 1 ou plusieurs paires de roues, comprenant au moins un berceau de suspension sur lequel repose une caisse, la caisse ayant un point d'appui mobile latéralement par rapport au berceau de suspension, caractérisé en ce que la caisse déplace son point d'appui latéralement sous l'effet de la force centrifuge par rapport au berceau de suspension vers la roue intérieure et que le centre de gravité de la caisse se situe en-dessous du point d'appui.

2. Système de suspension conformément à la revendication 1, caractérisé en ce que le point d'appui entre la caisse et le berceau se déplace sur des courbures fonctions de l'effet recherché.

3. Système de suspension conformément à la revendication 1, caractérisé en ce que le point d'appui est constitué par deux crémaillères, de modules identiques, de courbures différentes et fixées respectivement à la caisse et au berceau.

4. Système de suspension conformément à la revendication 1, caractérisé en ce que la caisse repose sur le berceau de la suspension par l'intermédiaire de liaisons élastiques amorties, de systèmes hydrauliques ou hydropneumatiques.

5. Système de suspension conformément à la revendication 1, caractérisé en ce que la caisse repose sur les extrémités extérieures du berceau permettant le soulèvement de la caisse du côté de la roue extérieure et le report du poids de la caisse sur la roue intérieure, ce soulèvement étant limité par des liaisons élastiques amorties, par un système hydraulique ou hydropneumatique.

**Patentansprüche**

1. Aufhängungssystem für Fahrzeuge mit einem oder mehreren Räderpaaren, umfassend mindestens eine Trägeraufhängung, auf der eine Karosserie ruht, wobei die Karosserie einen lateral beweglichen Abstützpunkt für die Übertragung auf die Trägeraufhängung aufweist, dadurch gekennzeichnet, daß die Karosserie durch Übertragung auf die Trägeraufhängung zum inneren Rad hin ihren seitlichen Abstützpunkt unter der Einwirkung der Zentrifugalkraft verlagert und daß der Schwerpunkt der Karosserie sich unter dem Abstützpunkt befindet.

2. Aufhängungssystem nach Anspruch 1, dadurch gekennzeichnet, daß der Abstützpunkt zwischen der Karosserie und dem Träger sich auf Krümmungsfunktionen der nachgesuchten Wirkung verlagert.

3. Aufhängungssystem nach Anspruch 1, dadurch gekennzeichnet, daß der Abstützpunkt durch zwei Zahnstangen mit identischen Modulen und unterschiedlichen Krümmungen zusammengesetzt ist und an der Karosserie respektive am Träger befestigt ist.

4. Aufhängungssystem nach Anspruch 1, dadurch gekennzeichnet, daß die Karosserie mittels elastischer gedämpfter Verbindungen, hydraulischer oder hydropneumatischer Systeme auf der Trägeraufhängung ruht.

5. Aufhängungssystem nach Anspruch 1, dadurch gekennzeichnet, daß die Karosserie auf den äußeren Rändern des Trägers ruht, was das Anheben der Karosserie auf der Seite des äußeren Rades und die Übertragung des Gewichts der Karosserie auf das innere Rad erlaubt, wobei dieses Anheben durch die elastischen gedämpften Verbindungen durch ein hydraulisches oder hydropneumatisches System limitiert sein muß.

**Claims**

1. Suspension system for vehicles with 1 or several wheel pairs comprising at least a suspension cradle over which rests a body, the body having a fulcrum which is sideway mobile relative to the suspension cradle, characterised in that the body shifts its fulcrum sideways under the influence of the centrifugal force , relative to the suspension cradle towards the inner wheel, and that the center of gravity of the body is located beneath the fulcrum.

2. Suspension system according to claim 1, characterized in that the fulcrum between the body and the cradle moves on curvatures according to the required result.

3. Suspension system according to claim 1 characterized in that the fulcrum is constituted by two toothed racks, of identical module, of different curvatures and secured respectively to the body and to the cradle.

4. Suspension system according to claim 1, characterized in that the body rests on the suspension cradle by the intermediacy of damped elastic bindings or by hydraulic or hydropneumatic systems.

5. Suspension system according to claim 1, characterized in that the body rests on the external ends of the cradle allowing the lifting of the body onto the side of the outer wheel and the transfer of the weight on the inner wheel, this lifting being limited by damped elastic bindings or by a hydraulic or hydropneumatic system.

Fc

G

Me

Mi

Sol

Poids

Re Pe

Pi

Roue extérieure

Roue intérieure

Figure 1 - Diagramme des forces pour un véhicule classique.

**En ligne droite**

Caisse

Appui

Base

G caisse H

Châssis

**En courbe**

G caisse

Roue extérieure          Roue intérieure

Figure 2

## En ligne droite

Caisse

G caisse

Châssis

## En courbe

G caisse

Roue extérieure          Roue intérieure

Figure 3

**En courbe**

Point d'appui de la caisse

Hv

G caisse

Hh

Poids de la caisse

↓
1/2 Poids du berceau

Roue extérieure

↓
1/2 Poids du berceau

Roue intérieure

Figure 4 - Répartition des poids des différents éléments lorsque le point de
contact est à l'extrémité.